# EUROPÄISCHE PATENTSCHRIFT

(11) **EP 1 753 643 B1**
(45) Veröffentlichungstag und Bekanntmachung des Hinweises auf die Patenterteilung: **30.03.2011**
(21) Anmeldenummer: 05756067.4
(22) Anmeldetag: 03.06.2005
(51) Int. Cl.: B60R 21/20, B60R 21/26

(54) **FAHRZEUGSITZ-EINHEIT**
VEHICLE SEAT UNIT
ENSEMBLE SIEGE DE VEHICULE

(30) Priorität: 08.06.2004 DE 202004009002 U
(43) Veröffentlichungstag der Anmeldung: 21.02.2007
(73) Patentinhaber: AUTOLIV DEVELOPMENT AB, 447 83 Vargarda (SE); Bayerische Motoren Werke Aktiengesellschaft, 80809 München (DE)
(72) Erfinder: RYDEN, Timo, S-44640 Skepplanda (SE); BJÖRKQVIST, Jonas, S-41656 Göteborg (SE); KARLSSON, Magnus, S-41258 Göteborg (SE); HUBER, Joachim, 85414 Kirchdorf (DE); KAUFFELD, Lars, 80807 München (DE)
(74) Vertreter: Schön, Thilo
(86) Internationale Anmeldenummer: PCT/EP2005/005975
(87) Internationale Veröffentlichungsnummer: WO 2005/120906

(56) Entgegenhaltungen:
- EP-A- 0 800 960
- GB-A- 2 293 355
- US-A- 5 704 637
- PATENT ABSTRACTS OF JAPAN Bd. 2003, Nr. 12, 5. Dezember 2003 (2003-12-05) & JP 2004 148879 A (DAIHATSU MOTOR CO LTD), 27. Mai 2004 (2004-05-27)

## Beschreibung

### Technisches Gebiet der Erfindung

Die Erfindung betrifft eine Fahrzeugsitz-Einheit nach dem Oberbegriff des Anspruchs 1.

Zum Schutz von Fahrzeuginsassen bei einem Seitenaufprall sind Fahrzeugsitze mit einer Gassack-Einheit bekannt. Hierbei ist die im wesentlichen aus einem Gassack und einem Gasgenerator bestehende Gassack-Einheit im Bereich der Seitenfläche an der Rückenlehne des Fahrzeugsitzes angeordnet, und der Gassack bläst sich im Bedarfsfall zwischen dem Insassen und der Fahrzeuginnenstruktur auf. Hierbei ist der Gasgenerator mittels eines Halteelements außen auf den Rahmen des Fahrzeugsitzes aufgeschraubt, wobei sich die Längsachse des in der Regel zylinderförmigen Gasgenerators im wesentlichen vertikal und parallel zur Seitenfläche des Sitzes erstreckt. Der Gasgenerator ist hierbei im wesentlichen vollständig vom Gassack umgeben, was eine schnelle Befüllung des Gassacks erlaubt. Eine solche Fahrzeugsitzeinheit ist beispielsweise aus der EP 0 844 145 B1 bekannt. Diese Anordnung der Gassack-Einheit ist zwar relativ einfach, hat jedoch den Nachteil, dass zusätzlicher Platz außerhalb des Fahrzeugrahmens benötigt wird, der insbesondere bei Sportfahrzeugen, Roadstern und Cabrios häufig nicht zur Verfügung steht.

### Stand der Technik

Aus der EP 0 724 986 B1 ist ein Fahrzeugsitz bekannt, bei dem ein Gasgenerator in ein Hohlrohr des Rahmens aufgenommen ist. Eine solche Konstruktion ist zwar sehr platzsparend, jedoch auch sehr aufwendig

Aus der Dokument JP2004148879, ist ein Fahjengsitz bekannt, dessen Rahmen eine Montageblech besteht,die die Gasgeneratoreinheit unmittelbar trägt.

### Gegenstand der Erfindung

Hiervon ausgehend ist es Aufgabe der Erfindung, eine gattungsgemäße Fahrzeugsitz-Einheit dahingehend weiterzubilden, dass die Gassack-Einheit wenig zusätzlichen Platz benötigt und dennoch relativ einfach am Fahrzeugsitz montierbar ist.

Diese Aufgabe wird durch eine Fahrzeugsitz-Einheit mit den Merkmalen des Anspruchs 1 gelöst.

Die erfindungsgemäße Lösung basiert darauf, dass eine andere Einbaugeometrie des Gasgenerators vorgesehen ist. Die Längsachse des im wesentlichen zylinderförmigen Gasgenerators verläuft hierbei im wesentlichen horizontal und senkrecht zur Seitenfläche des Fahrzeugsitzes, so dass sich der Gasgenerator in axialer Richtung ganz oder teilweise in den Sitz hinein erstrecken kann. Hierdurch ergibt sich die gewünschte Platzersparnis.

Bevorzugte Ausführungsformen der Erfindung ergeben sich aus den Unteransprüchen sowie aus den nun mit Bezug auf die Figuren näher dargestellten Ausführungsbeispielen. Hierbei zeigen:

### Kurzbeschreibung der Zeichnungen

- Figur 1: Die Rückenlehne eines Kraftfahrzeugsitzes in einem vertikalen Schnitt,
- Figur 2: einen Teil der Rückenlehne aus Figur 1 entlang der Schnittlinie A-A in Figur 1,
- Figur 3: ein zweites Ausführungsbeispiel in einer der Figur 2 entspre- chenden Darstellung,
- Figur 4: eine perspektivische Ansicht einer auf ein Montageblech mon- tierten Gasgeneratoreinheit,
- Figur 5: eine Draufsicht auf eine alternative Ausgestaltung einer Hülse,
- Figur 6: einen Längsschnitt durch die Hülse aus Figur 5 , sowie den sich in der Hülse befindenden Gasgenerator.

### Beschreibung bevorzugter Ausführungsformen

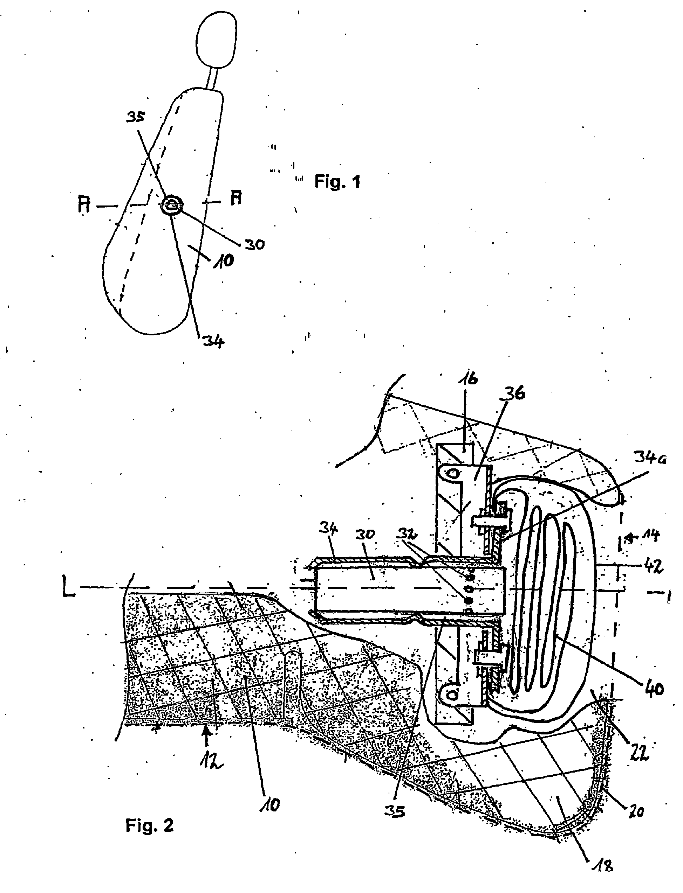

Figur 1 zeigt einen vertikalen Schnitt durch die Rückenlehne 10 eines Fahrzeugsitzes. In der Rückenlehne 10 ist ein zylindrischer Gasgenerator 30 aufgenommen, dessen Längsachse sich horizontal und parallel zur Vorderfläche der Rückenlehne 10 erstreckt. Der Gasgenerator 30 ist konzentrisch von einer Hülse 34 umgeben, wobei in einem vorderen Bereich ein Ringspalt 35 zwischen Gasgenerator 30 und Hülse 34 vorhanden ist. Durch diesen Ringspalt strömt im Betätigungsfall Gas von den Gasaustrittsöffnungen des Gasgenerators in den Gassack, wie mit,Blick auf Figur 2 deutlich wird:

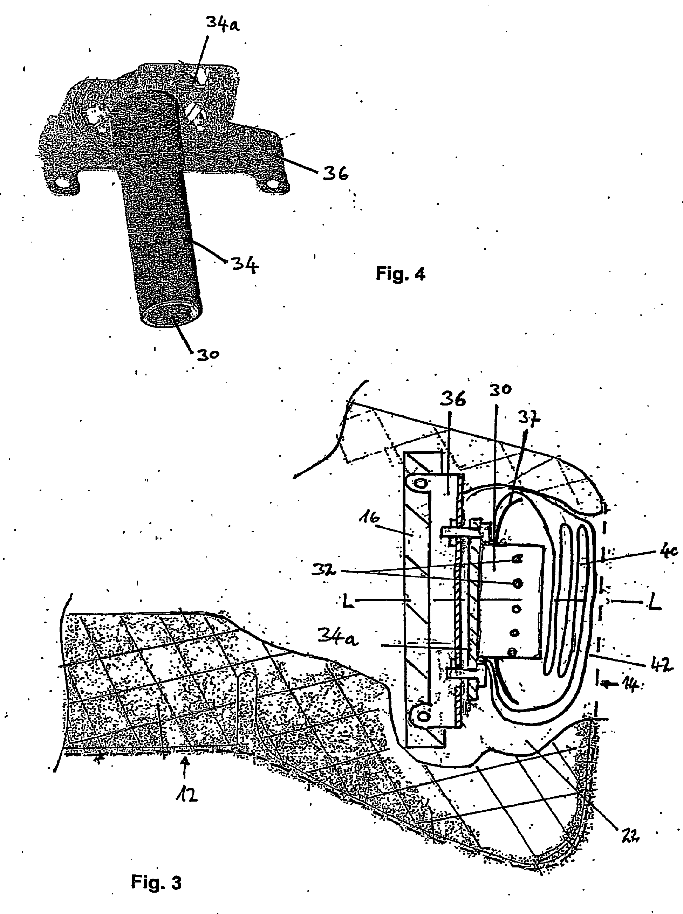

Figur 2 zeigt einen Schnitt durch die Rückenlehne aus Figur 1 entlang der Schnittlinie A-A. Wie bereits erwähnt, erstreckt sich der Gasgenerator 30 und die ihn umgebende Hülse 34 in den Sitz hinein, wobei die Längsachse L-L des Gasgenerators 30 bzw. der Hülse 34 parallel zur Vorderfläche 12 und im wesentlichen senkrecht zur Seitenfläche 14 der Rückenlehne 10 steht. Die Hülse 34 ist mit dem Gasgenerator 30 fest verkrimpt, so dass die Hülse 34 neben einer gasleitenden Funktion auch die Funktion eines Befestigungselementes für den Gasgenerator 30 hat. Die Hülse 34 erfüllt also eine doppelte Aufgabe. In diesem Ausführungsbeispiel ist die Hülse 34 mit einem gewinkelten Montageblech 36 verschraubt, welches wiederum mit dem Rahmen 16 der Rückenlehne verschraubt oder vernietet ist - siehe hierzu auch Figur 4, die das gewinkelte Montageblech 36, die Hülse 34 und das hintere Ende des Gasgenerators 30 zeigt. Zu diesem Zweck weitet sich die Hülse 34 an ihrem vorderen Ende zu einem Flansch 34a auf, der in einer Ebene liegt, die senkrecht zur Längsachse des Gasgenerators ist

Vor dem Gasgenerator 30 ist in einem Hohlraum 22 der Polsterung 18 der Gassack 40 angeordnet, welcher in einer Umhüllung 42 aufgenommen ist. Bei einströmendem Gas öffnet sich die Umhüllung 42 aufgrund des sich ausdehnenden Gassacks 40 beispielsweise an einer Sollbruchstelle. Der Gassack tritt dann aus dem Sitz aus und entfaltet sich zwischen FahrzeugInnenstruktur und Insassen. Hierfür weist der Bezug 20 der Rückenlehne ebenfalls eine Sollbruchstelle oder einen Schlitz auf.

Wie man anhand Figur 2 sieht, sind die Gasaustrittsöffnungen 32 auf einem die Längsachse L-L des Gasgenerators umlaufenden Kreisring auf der Mantelfläche des Gasgenerators angeordnet Dieser Kreisring liegt in einer vertikalen Ebene, die senkrecht zur Vorderfläche beziehungsweise parallel zur Seitenfläche der Rückenlehne ist. Im Betätigungsfall strömt das Gas von hier in dem zwischen dem Gasgenerator 30 und der Hülse 34 ausgebildeten Ringspalt 35 und von dort in das Innere des Gassacks 40. Das Gas wird hier also von einer zunächst radialen Strömungsrichtung in eine axiale Strömungsrichtung umgelenkt; dies ist notwendig, wenn die Gasaustrittsöffnungen 32 außerhalb des Gassack-Inneren angeordnet sind, was die maximale Platzersparnis ermöglicht. Die Gasaustrittsöffnungen liegen in diesem Ausführungsbeispiel hinter der Vorderfläche des Montageblechs 36 im Bereich des Rahmens 16. Der hintere Abschnitt des Gasgenerators erstreckt sich bis in einen Bereich der Rückenlehne, die sich innenseitig des Rahmens 16 befindet.

Figur 3 zeigt ein Ausführungsbeispiel mit einem flachen, topfförmigen Gasgenerator (pancake). Auch dieser Gasgenerator 30 ist zylindrisch und seine Längsachse L-L erstreckt sich parallel zur Vorderfläche 12 und im wesentlichen senkrecht zur Seitenfläche 14. Die Geometrie ist hier so gewählt, dass die Gasaustrittsöffnungen 32 im Inneren des Gassacks 40 liegen, so dass auf eine Hülse und eine Gasumleitung verzichtet werden kann. Die maximal erzielbare Platzeinsparung ist deshalb auch etwas geringer als im ersten Ausführungsbeispiel. Der Gasgenerator 30 weist einen Flansch 34a in Form der Bodenplatte 30a auf, welche mit dem Montageblech 36 verschraubt ist.

Zum Schutz des umliegenden Gassack-Gewebes ist im Bereich der Gasaustrittsöffnungen 32 ein Deflektorkranz 37 vorgesehen.

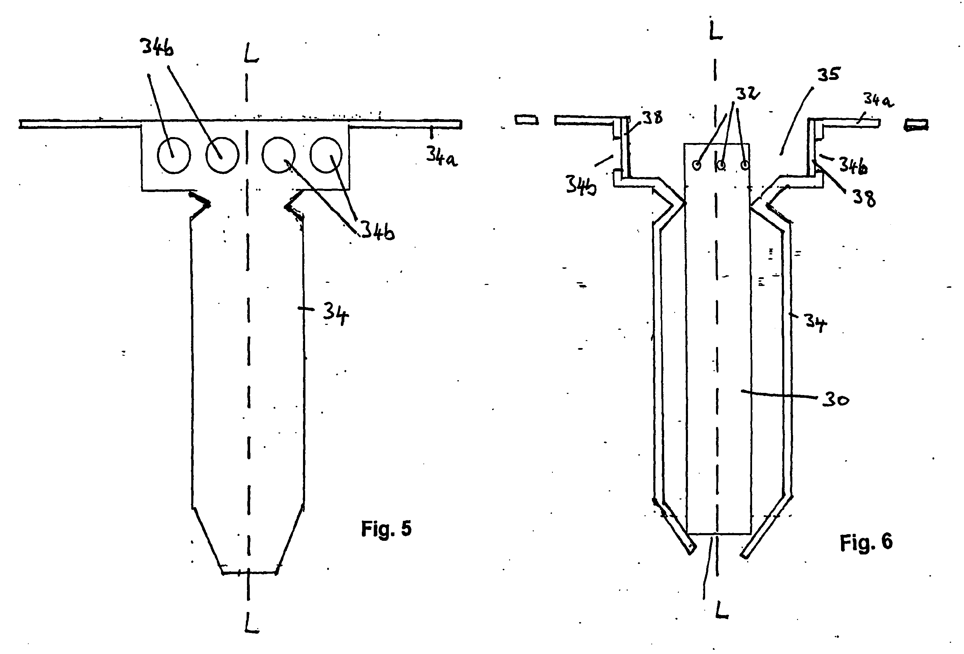

Die Figuren 5 und 6 zeigen eine alternative Ausführungsform der aus Hülse 34 und Gasgenerator 30 bestehenden Gasgenerator-Einheit. Hierbei ist die Figur 6 ein Längsschnitt durch die Figur 5.

Die aus Hülse und Gasgenerator bestehende Gasgenerator-Einheit wird in der Regel separat gefertigt und bis zum Einbau in die Rückenlehne gelagert. Problematisch bei der in Figur 2 gezeigten Gasgenerator-Einheit ist, dass diese sich nicht schubneutral verhält. Zündet der Gasgenerator im Falle eines Lagerbrandes, so tritt Gas in den Ringspalt ein und tritt im wesentlichen axial aus diesem aus, so dass sich eine entsprechende Beschleunigung ergibt. Im in den Figuren 5 und 6 gezeigten Ausführungsbeispiel tritt dieser Effekt nicht, oder nur in sehr abgeschwächter Form auf:

Die Hülse 34 besteht hier, wie im bisherigen Ausführungsbeispiel auch, aus Metall. Im Bereich des Ringspaltes 35 weist sie im wesentlichen dem Gasaustrittsöffnung 32 gegenüberliegende Durchbrechungen 34b auf. Diese sind vom ein Kunststoffelement bildenden Kunststoffring 38 abgedeckt. Material und Dicke dieses Kunststoffrings 38 sind so gewählt, dass er für die Dauer des Betriebes des Gasgenerators seine Stabilität behält. Kommt es jedoch zu einem Lagerbrand, so schmilzt der Kunststoffring 38 und gibt die Durchbrechungen 34b frei, so dass ein großer Teil der von den Gasaustrittsöffnungen 32 kommenden Gase durch diese symmetrisch angeordneten Durchbrechungen 34b entweicht, wodurch sich die Gasgenerator-Einheit im wesentlichen schubneutral verhält. Alternativ hierzu wäre es auch denkbar, die gesamte Hülse 34 oder zumindest den Bereich des Ringspaltes der Hülse 34 aus Kunststoff zu fertigen, der im Brandfall seine Stabilität verliert. Das hier gezeigte Ausführungsbeispiel hat jedoch den Vorteil der insgesamt größeren mechanischen Stabilität.

### Bezugszeichenliste

- 10: Rückenlehne
- 12: Vorderfläche
- 14: Seitenfläche
- 16: Rahmen
- 18: Polsterung
- 20: Bezug
- 22: Hohlraum
- 30: Gasgenerator
- 31: Anschlüsse für Zündkabel
- 32: Gas-Austrittsöffnungen
- 34: Hülse
- 34a: Flansch
- 34b: Durchbrechung
- 35: Ringspalt
- 36: Montageblech
- 37: Deflektorkranz
- 38: Kunststoffring
- 40: Gassack
- 42: Umhüllung

## Patentansprüche

1. Fahrzeugsitz-Einheit mit einem eine Rückenlehne (10) mit einer Vorderfläche (12) und einer Seitenfläche (14) aufweisenden Fahrzeugsitz und einer zu einem Gassack-Modul gehörenden Gasgeneratoreinheit mit einem im wesentlichen zylinderförmigen Gasgenerator (30) mit einer Längsachse (L-L), wobei sich die Längsachse (L-L) im wesentlichen parallel zur Vorderfläche (12) und senkrecht zur Seitenfläche (14) des Fahrzeugsitzes erstreckt und die Gasgeneratoreinheit einen Flansch (34a) aufweist,
**dadurch gekennzeichnet, dass** der Flansch (34a) an einem Montageblech (36) befestigt ist, welches wiederum auf dem Rahmen der Rückenlehne (10) montiert ist.

2. Fahrzeugsitz-Einheit nach Anspruch 1, **dadurch gekennzeichnet, dass** die Gasgeneratoreinheit einen länglich ausgebildeten Gasgenerator (30) sowie eine diesen zumindest abschnittsweise umfassende Hülse (34) umfasst, wobei die Hülse an einem Ende den Flansch (34a) aufweist, der mittelbar am Rahmen (16) der Rückenlehne befestigt ist.

3. Fahrzeugsitz-Einheit nach Anspruch 1, **dadurch gekennzeichnet, dass** die Gasgeneratoreinheit einen flachen, topfförmig ausgebildeten Gasgenerator (30) umfasst, der den Flansch (34a) aufweist, der mittelbar am Rahmen (16) der Rückenlehne befestigt ist.

4. Fahrzeugsitz-Einheit nach einem der vorangehenden Ansprüche, **dadurch gekennzeichnet, dass** die Gas-Austrittsöffnungen (32) des Gasgenerators (30) rotationssymmetrisch bezüglich der Längsachse (L-L) auf einer Kreislinie auf der Mantelfläche des Gasgenerators liegen, sodass die Kreislinie in einer Ebene liegt, die im wesentlichen senkrecht zur Vorderfläche (12) und parallel zur Seitenfläche (14) der Rückenlehne ist.

5. Fahrzeugsitz-Einheit nach Anspruch 4, **dadurch gekennzeichnet, dass** die Ebene im Bereich des Rahmens (16) der Rückenlehne liegt.

6. Fahrzeugsitz-Einheit nach einem der vorangehenden Ansprüche, **dadurch gekennzeichnet, dass** zumindest der Bereich des Gasgenerators, in dem die Cas-Austrittsöffnungen angeordnet sind, von einer Hülse (34) umschlossen ist, wobei zwischen Gasgenerator (30) und Hülse (34) ein Ringspalt (35) ausgebildet ist, durch den bei Betätigung des Gasgenerators Gas in einen in axialer Richtung vor dem Gasgenerator angeordneten Gassack (40) strömt.

7. Fahrzeugsitz-Einheit nach Anspruch 2 und Anspruch 6, **dadurch gekennzeichnet, dass** die den Flansch (34a) aufweisende Hülse (34) und die mit dem Gasgenerator (30) den Ringspalt (35) bildende Hülse (34) das selbe Bauteil sind.

8. Fahrzeugsitz-Einheit nach Anspruch 6 oder Anspruch 7, **dadurch gekennzeichnet, dass** die Hülse (34) aus Metall besteht und im Bereich des Ringspalts (35) Durchbrechungen (34b) aufweist, welche von einem Kunststoffelement abgedeckt sind.

9. Fahrzeugsitz-Einheit nach Anspruch 6 oder Anspruch 7, **dadurch gekennzeichnet, dass** die Hülse (34) zumindest im Bereich des Ringspalts (35) aus Kunststoff besteht.

10. Fahrzeugsitz-Einheit nach einem der vorangehenden Ansprüche, **dadurch gekennzeichnet, dass** sich zumindest ein Abschnitt des Gasgenerators (30) innenseitig des Rahmens (16) der Rückenlehne befindet.

## Claims

1. Vehicle seat unit comprising a vehicle seat having a backrest (10) with a front surface (12) and a side surface (14), and a gas generator unit belonging to an airbag module, said gas generator unit comprising a basically cylindrical gas generator (30) with a longitudinal axis (L-L), whereby said longitudinal axis (L-L) extends substantially parallel to the front surface (12) and perpendicularly to the side surface (14) of the vehicle seat and the gas generator unit comprises a flange (34a),
**characterised in that** the flange (34a) is fastened to a fitting panel (36) which in tum is mounted on the frame of the backrest (10).

2. Vehicle seat unit according to Claim 1, **characterised in that** the gas generator unit comprises an gas generator (30) of oblong shape as well as a sleeve (34) which encloses the gas generator (30) at least in sections, whereby the sleeve at one end exhibits the flange (34a), which is fastened indirectly to the frame (16) of the backrest.

3. Vehicle seat unit according to Claim 1, **characterised in that** the gas generator unit comprises a flat, pancake-type gas generator (30), which exhibits the flange (34a), which is fastened indirectly to the frame (16) of the backrest.

4. Vehicle seat unit according to one of the preceding claims, **characterised in that** the gas outlet openings (32) of the gas generator (30) lie rotationally symmetric in relation to the longitudinal axis (L-L) on a circular line on the jacket surface of the gas generator so that the circular line lies in a plane which is basically perpendicular to the front surface (12) and parallel to the side surface (14) of the backrest.

5. Vehicle seat unit according to Claim 4, **characterised in that** the plane lies in the area of the frame (16) of the backrest.

6. Vehicle seat unit according to one of the preceding claims, **characterised in that** at least the area of the gas generator in which the gas outlet openings are located is surrounded by a sleeve (34), whereby an annular gap (35) is formed between the gas generator (30) and the sleeve (34), through which, when the gas generator is activated, gas streams into an airbag (40) located in axial direction in front of the gas generator.

7. Vehicle seat unit according to claim 2 and claim 6, **characterised in that** the sleeve (34) exhibiting the flange (34a), and the sleeve (34) forming the annular gap (35) with the gas generator (30) are the same component.

8. Vehicle seat unit according to claim 6 or claim 7, **characterised in that** the sleeve (34) consists of metal and, in the area of the annular gap (35), exhibits through-holes (34b), which are covered by a plastic element.

9. Vehicle seat unit according to claim 6 or claim 7, **characterised in that** the sleeve (34) consists of plastic, at least in the area of annular gap (35).

10. Vehicle seat unit according to one of the preceding claims, **characterised in that** at least a section of gas the generator (30) is located inside the frame (16) of the backrest.

## Revendications

1. Ensemble de siège de véhicule, comportant un siège de véhicule, comprenant un dossier (10) avec une face avant (12) et une face latérale (14), et une unité à générateur de gaz faisant partie d'un module de coussin d'air et munie d'un générateur de gaz (30) sensiblement cylindrique avec un axe longitudinal (L-L), ledit axe longitudinal (L-L) étant sensiblement parallèle à la face avant (12) et perpendiculaire à la face latérale (14) du siège de véhicule, et l'unité à générateur de gaz comportant une collerette (34a), **caractérisé en ce que** la collerette (34a) est fixée à une tôle de montage (36) qui, pour sa part, est montée sur le cadre du dossier (10).

2. Ensemble de siège de véhicule selon la revendication 1, **caractérisé en ce que** l'unité à générateur de gaz comporte un générateur de gaz (30) de forme allongée, ainsi qu'une gaine (34) entourant celui-ci au moins par zones, ladite gaine étant munie au niveau d'une extrémité de ladite collerette (34a) qui est fixée indirectement au cadre (16) du dossier de siège.

3. Ensemble de siège de véhicule selon la revendication 1, **caractérisé en ce que** l'unité à générateur de gaz comporte un générateur de gaz (30) plat en forme de godet, lequel est muni de la collerette (34a) qui est fixée indirectement au cadre (16) du dossier de siège.

4. Ensemble de siège de véhicule selon l'une quelconque des revendications précédentes, carartérisé en ce que les orifices de sortie du gaz (32) du générateur de gaz (30) sont disposés selon une symétrie en révolution par rapport à l'axe longitudinal (L-L) sur une ligne circulaire sur la paroi latérale du générateur de gaz, de telle sorte que la ligne circulaire se situe dans un plan qui est sensiblement perpendiculaire à la face avant (12) et parallèle à la face latérale (14) du dossier.

5. Ensemble de siège de véhicule selon la revendication 4, **caractérisé en ce que** ledit plan se situe dans la zone du cadre (16) du dossier de siège.

6. Ensemble de siège de véhicule selon l'une quelconque des revendications précédentes, **caractérisé en ce qu'**au moins la zone du générateur de gaz, dans laquelle sont disposés les orifices de sortie du gaz, est entourée par une gaine (34), sachant qu'entre le générateur de gaz (30) et la gaine (34) est réalisée une fente annulaire (35), à travers laquelle, en cas d'actionnement du générateur de gaz, le gaz afflue dans un coussin d'air (40) disposé dans la direction axiale devant le générateur de gaz.

7. Ensemble de siège de véhicule selon la revendication 2 et la revendication 6, **caractérisé en ce que** la gaine (34) munie de la collerette (34a) et la gaine (34) formant avec le générateur de gaz (30) la fente annulaire (35) sont le même élément.

8. Ensemble de siège de véhicule selon la revendication 6 ou la revendication 7, **caractérisé en ce que** la gaine (34) est réalisée en métal et comporte dans la zone de la fente annulaire (35) des passages (34b) qui sont masqués par un élément en matière plastique.

9. Ensemble de siège de véhicule selon la revendication 6 ou la revendication 7, **caractérisé en ce que** la gaine (34), au moins dans la zone de la fente annulaire (35), est réalisée en matière plastique.

10. Ensemble de siège de véhicule selon l'une quelconque des revendications précédentes, **caractérisé en ce qu'**au moins une partie du générateur de gaz (30) est disposée sur le côté intérieur du cadre (16) du dossier de siège.
